# EUROPÄISCHE PATENTSCHRIFT

(11) **EP 1 607 694 B1**
(45) Veröffentlichungstag und Bekanntmachung des Hinweises auf die Patenterteilung: **01.04.2009**
(21) Anmeldenummer: 05450065.7
(22) Anmeldetag: 12.04.2005
(51) Int. Cl.: F24H 9/12

(54) **Anschlussarmatur**
Connection fitting
Dispositif de raccordement

(30) Priorität: 07.06.2004 AT 9862004
(43) Veröffentlichungstag der Anmeldung: 21.12.2005
(60) Teilanmeldung: 06010589.7
(73) Patentinhaber: Herz Armaturen Ges.m.b.H., 1230 Wien (AT)
(72) Erfinder: Lomot, Dimitri, 1030 Wien (AT)
(74) Vertreter: Wildhack, Helmut

(56) Entgegenhaltungen:
- EP-A- 0 130 075
- DE-A1- 19 607 694
- DE-U1- 9 421 996
- FR-A- 2 674 311
- GB-A- 1 320 934
- GB-A- 1 331 615

## Beschreibung

Die Erfindung betrifft eine Anschlussarmatur gemäß dem Oberbegriff des Anspruchs 1.

Anschlussarmaturen zum Anschluss eines Heizkörpers an einen Heizkreislauf sind in vielfältiger Ausführung bekannt.

So sind beispielsweise aus der DE 94 21 996 U1, der GB 1 331 615, der GB 1 320 934 sowie der EP 0 130 075 Anschlussvorrichtungen für Heizkörper an einen Heizkreislauf mit einem Ventil bekannt, bei denen die Längsachse des Ventils in der Ebene der Anschlüsse liegt.

Anschlussarmaturen, insbesondere direkt mit dem Heizkreislauf verbundene Ventile, die den Vorlauf und Rücklauf von Heizmedium zum Heizkörper und zurück regeln, haben zumeist einen fix vorgegebenen Durchflussweg für den Vorlauf und einen fix vorgegebenen Durchflussweg für den Rücklauf. Dies bringt den Nachteil mit sich, dass man das Ventil beim Montieren auf die bauseitig meist schon vorhandenen Stutzen des Heizkreislaufs nur in eine vorgegebene Richtung weisend montieren kann oder die Stutzen überkreuzen müsste. Andernfalls wäre eine vorteilhafte Durchströmung des Heizkörpers nicht gegeben.

Um dieses Problem zu lösen, gibt es Ventile, bei denen die Durchflusswege für den Vorlauf und für den Rücklauf wechselseitig geändert bzw. ineinander übergeführt werden können, sodass das Ventil auf die Stutzen des Heizkreislaufes montiert werden kann und erst danach die Durchflusswege des Ventils festgelegt werden.

Diese Einstellung der Durchflussrichtung muss jedoch nachteiligerweise während der Anschlussmontagearbeiten erfolgen und kann während des Betriebes nicht mehr bzw. nur mit größerem Aufwand geändert bzw. umgestellt werden.

Zur Behebung dieses Nachteils sind Ventile bekannt, mit denen eine Einstellung bzw. ein Wechsel der Durchflussrichtung auch während des Betriebes einstellbar ist.

Auch sind Ventile bekannt, bei denen ein Teil des ins Ventil einströmenden Heizmediums durch einen eigens dafür ausgelegten, separat ausgeführten Kanal direkt und ohne Umweg über den Heizkörper vom Vorlaufstutzen zum Rücklaufstutzen und damit wieder zurück in den Heizkreislauf strömt. Dadurch ist gewährleistet, dass auch bei gesperrter Ventilstellung ein konstanter Heizmediumstrom vorliegt und der Heizkreislauf ohne Unterbrechung bleibt.

Aufgabe der Erfindung ist es, ein Ventil vorzusehen, das auf konstruktiv einfache Art ein Regulieren des Stromes bzw. der Durchflusswege während des Betriebes und eine effektive Absperrung des Heizkörpers ermöglicht. Weiters ist es Aufgabe der Erfindung eine stabiles Ventil vorzusehen, das einfach herzustellen bzw. zu fertigen ist, das für den Benutzer leicht zu betätigen bzw. zu erreichen ist und das so angeordnet ist, dass es gegenüber der Ebene des Heizkörpers nicht hervortritt oder absteht.

Die Aufgabe wird durch die erfindungsgemäßen Kennzeichen des Anspruchs 1 gelöst.

Durch die vorgeschlagenen Maßnahmen wird es ermöglicht, das Ventil sehr klein und kompakt auszuführen. Außerdem ergeben sich Vorteile durch einen vereinfachten Herstellungsprozess bzw. durch Gewicht- und Materialersparnisse. Die Regelungs- und Zugangsmöglichkeiten werden ebenfalls verbessert wodurch maximale Anschlussvariabilität gewährleistet wird. Ferner wird der Aufbau einfacher und damit sind Dichtigkeit bzw. Abdichtungsmöglichkeiten einfacher herstellbar. Die Armatur ist einfach durch Giessen oder Schmieden herstellbar und die Anschlussgeometrie ist exakter und mit weniger Aufwand herstellbar. Die Merkmale des Anspruchs 1 verleihen dem Ventil weiters eine gewisse Symmetrie und Ausgewogenheit, wodurch die Stabilität und Langlebigkeit des Ventils unterstützt wird.

Durch die Merkmale des Anspruchs 2 ergibt sich der Vorteil, dass die Anschlüsse sehr einfach mit dem Heizkreislauf bzw. mit einem geraden, mit Heizmedium gefüllten Rohr verbindbar sind.

Die Merkmale des Anspruchs 3 verleihen dem Ventil Symmetrie und Ausgewogenheit, wodurch die Stabilität und Langlebigkeit des Ventils gesteigert wird.

Die Anordnung der Durchflusskanäle im Küken gemäß den Merkmalen des Anspruchs 4 erlaubt eine einfache Herstellung derselben.

Um zu gewährleisten, dass auch bei gesperrter Ventilstellung ein konstanter Heizmediumstrom vorliegt und der Heizkreislauf ohne Unterbrechung bleibt, ist es vorteilhaft, wenn die Merkmale des Anspruchs 5 ausgebildet sind.

Durch die erfindungsgemäßen Merkmale des Anspruchs 6 wird eine konstruktiv einfache Methode vorgesehen, um die heizkörperseitigen Ausgänge bzw. Eingänge des Ventils platzsparend anordnen zu können.

Die Merkmale des Anspruchs 7 stellen sicher, dass die Durchflusswege für das Heizmedium in vorteilhafter Weise einfach einstellbar sind. Somit kann der Zufluss des Heizmediums zum Heizkörper, gegebenenfalls auch komplett, unterbunden werden, und eine Reparatur bzw. ein Austausch des Heizkörpers ist möglich, ohne dass der Heizkreislauf beeinträchtigt bzw. unterbrochen wird.

Im konstruktiv einfacher und stabiler Weise wird die Möglichkeit zur Einstellung der Durchflussrichtung durch ein Küken, das die Merkmale des Anspruchs 8 aufweist, gewährleistet.

Eine alternative Ausführungsform wird mit den Merkmalen des Anspruchs 9 beschrieben. Derartige Küken sind besonders einfach herzustellen und haben geringes Gewicht.

Eine vorteilhafte Ausgestaltung der Durchflusswege durch das alternativ ausgestaltete Küken wird in den Merkmalen des Anspruchs 10 dargestellt, womit die Durchflusswege leicht und präzise einstellbar sind.

Um die Dichtheit des Ventils in Sperrstellung zu gewährleisten ist es vorteilhaft, wenn die Merkmale des Anspruchs 11 vorgesehen sind.

Um das Ventil stabiler gegen mechanische Einflüsse zu machen bzw. auf das Küken ausgeübte Drücke bzw. Druckbewegungen abzufangen bzw. zu verteilen, ist es vorteilhaft, wenn die Merkmale des Anspruches 12 ausgebildet sind.

Damit das Heizmedium vom Ventil in den Heizkörper einströmen kann ist es vorteilhaft, wenn die Merkmale des Anspruches 13 gegeben sind. Dadurch wird auch gewährleistet, dass der Rücklauf aus dem Heizkörper in den Heizkreislauf getrennt vom Vorlauf geführt ist und es zu keiner Vermischung der Ströme kommt.

Für eine möglichst einfache, vielseitige und unkomplizierte Montage ist es vorteilhaft, die Merkmale des Anspruchs 14 vorzusehen, da damit das Ventil ohne Weiteres auf eine beliebige Seite des Heizkörpers montiert werden kann bzw. der Anschluss an den Heizkreislauf in beliebiger radialer Richtung erfolgen kann.

Zur Steuerung der Heizleistung ist es vorteilhaft, wenn gemäß Anspruch 15 eine Reguliereinheit vorgesehen ist, die in ergonomisch richtiger Position angeordnet ist.

Weitere Vorteile und Ausgestaltungen der Erfindung ergeben sich aus der Beschreibung und den beiliegenden Zeichnungen.

Die Erfindung ist anhand von Ausführungsbeispielen in den Zeichnungen schematisch dargestellt und wird im Folgenden unter Bezugnahme auf die Zeichnungen beispielsweise beschrieben.
Fig. 1 zeigt eine erfindungsgemäße Anschlussarmatur inklusive Heizkörper mit einer thermostatischen Reguliereinheit.
Fig. 2 zeigt eine erfindungsgemäße Anschlussarmatur inklusive Heizkörper mit einer manuellen Reguliereinheit.
Fig. 3a zeigt eine Schnittansicht des Ventils von der Seite bei einer Durchflussstellung 70.
Fig. 3b zeigt eine Schnittansicht des Ventils gemäß der Schnittlinie A-A bei einer Durchflussstellung 70.
Fig. 3c zeigt eine Draufsicht auf das Ventil bei einer Durchflussstellung 70.
Fig. 3d zeigt eine Detailansicht des Kükens mit schematischen Durchflusswegen bei einer Durchflussstellung 70.
Fig. 4a zeigt eine Schnittansicht des Ventils von der Seite bei einer Durchflussstellung 80.
Fig. 4b zeigt eine Schnittansicht des Ventils gemäß der Schnittlinie A-A bei einer Durchflussstellung 80.
Fig. 4c zeigt eine Draufsicht auf das Ventil bei einer Durchflussstellung 80.
Fig. 4d zeigt eine Detailansicht des Kükens mit schematischen Durchflusswegen bei einer Durchflussstellung 80.
Fig. 5a zeigt eine Schnittansicht des Ventils von der Seite bei einer Sperrstellung 90.
Fig. 5b zeigt eine Schnittansicht des Ventils gemäß der Schnittlinie A-A bei einer Sperrstellung 90.
Fig. 5c zeigt eine Draufsicht auf das Ventil bei einer Sperrstellung 90.
Fig. 6a zeigt einen Querschnitt durch eine alternative Ausführungsform eines Kükens.
Fig. 6b zeigt eine Ansicht des alternativen Kükens.
Fig. 6c und 6d zeigen Schnittansichten durch das alternative Küken.
Fig. 7a zeigt eine Detailansicht des alternativen Kükens mit angedeuteten Durchflusswegen bei einer Durchflussstellung 70.
Fig. 7b zeigt eine Detailansicht des alternativen Kükens mit angedeuteten Durchflusswegen bei einer Durchflussstellung 80.

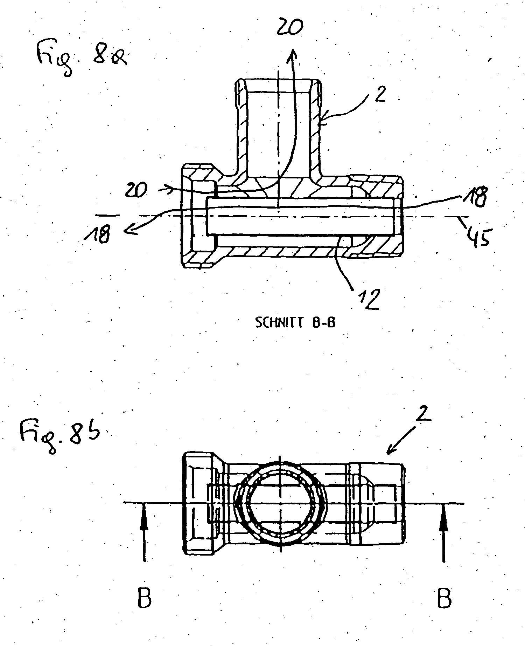

Fig. 8a und 8b zeigen eine Schnittansicht des T-Stücks von der Seite gemäß der Schnittlinie B-B und eine Ansicht des T-Stücks von oben.

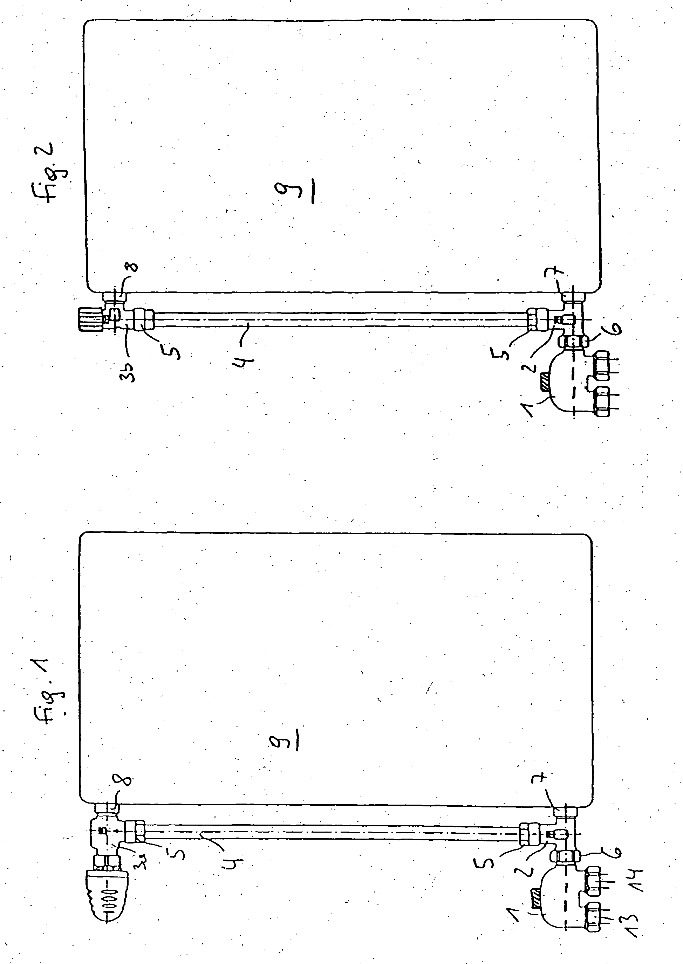

Aus Fig. 1 und Fig. 2 ist ersichtlich, wie die einzelnen Komponenten der erfindungsgemäßen Anschlussarmatur zusammenwirken. Die Anschlussarmatur umfasst zumindest ein Ventil 1 und kann gegebenenfalls, wie im Folgenden beschrieben, neben dem Ventil 1 noch weitere Komponenten umfassen.

Das Ventil 1 ist mit seinen beiden Anschlüssen 13, 14 an einen, insbesondere als Einrohrsystem ausgebildeten, Heizkreislauf anschließbar und über einen weiteren Anschluss mit einem T-Stück 2 verbunden. Der Heizkörper 9 selbst besitzt zwei Anschlüsse, und zwar einen Radiatorvorlaufanschluss 8 und einen Radiatorrücklaufanschluss 7. Zwischen dem T-Stück 2 und dem Radiatorvorlaufanschluss 8, insbesondere an einem Verbindungsrohr 4, ist eine Reguliereinheit 3a, 3b vorgesehen, die entweder thermostatisch reguliert ist oder manuell reguliert werden kann. Die Reguliereinheit 3a,3b kann auch direkt am Ventil 1 oder im Bereich des T-Stücks 2 vorgesehen sein.

Aus strömungstechnischen Gründen und um im Heizkörper 9 eine optimale thermische Verteilung des Heizmediums zu erzeugen, befindet sich der Radiatorvorlaufanschluss 8 am oberen Ende des Heizkörpers 9 und das Heizmedium wird über das Verbindungsrohr 4 und über die Reguliereinheit 3a, 3b über diesen Radiatorvorlaufanschluss 8 in den Heizkörper 9 eingespeist. Das abgekühlte Heizmedium verlässt über den am unteren Ende des Heizkörpers vorgesehenen Radiatorrücklaufanschluss 7 den Heizkörper 9 und fließt über das T-Stück 2 über das Ventil 1 zurück in den Heizkreislauf.

Es ist auch möglich, dass die Anschlussarmatur nur aus dem direkt über entsprechende Anschlussstutzen an den Heizkörper 9 angeschlossenen Ventil 1 besteht bzw. gebildet wird.

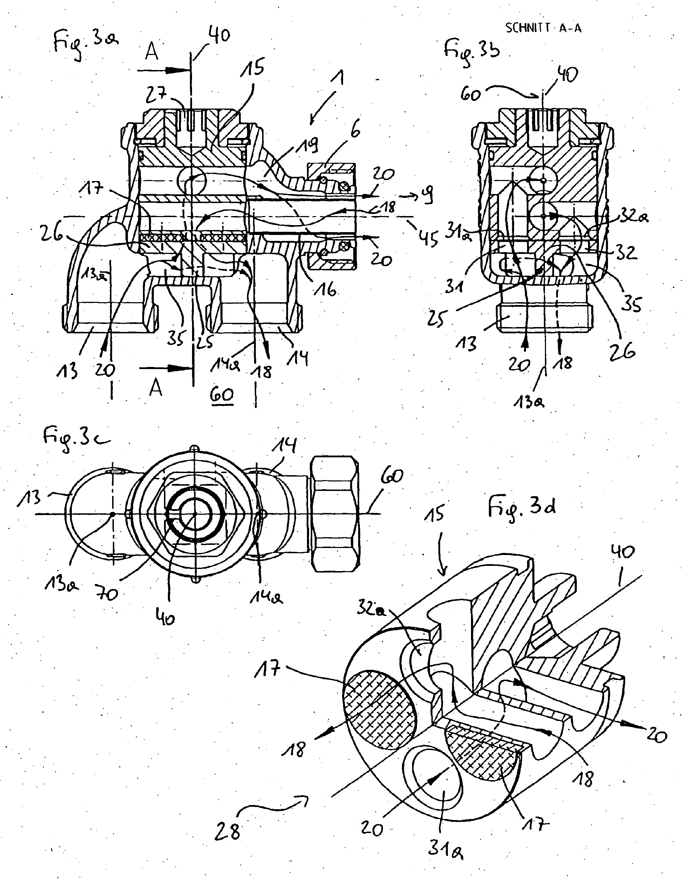

Fig. 3a-c, 4a-c und 5a-c zeigen detaillierte Ansichten des gesamten Ventils 1 bei unterschiedlichen Durchfluss- bzw. Sperrstellungen 70, 80, 90.

Das Ventil 1 besitzt zwei heizkreislaufseitige Anschlüsse, nämlich einen ersten Anschluss 13 und einen zweiten Anschluss 14, durch die das Heizmedium von einem, insbesondere als Einrohr-System ausgebildeten, Heizkreislauf ins Ventil 1 und in weiterer Folge in den Heizkörper 9 sowie aus dem Heizkörper 9 über das Ventil 1 wieder zurück in den Heizkreislauf strömen kann. Welcher der beiden Anschlüsse 13,14 als Vorlaufanschluss dienen soll, ist frei wählbar.

Im Ventils 1 befindet sich ein im Wesentlichen zylindrisches Küken 15, das bezüglich seiner zentralen Längs- bzw. Zylinderachse 40 verdrehbar in einer Ausnehmung bzw. Bohrung des Ventils 1 auf einem Kükenabstützboden 26 gelagert ist. Das Küken 15 steuert die Durchflusswege des Heizmediums vom Heizkreislauf durch das Ventil 1 hindurch zum Heizkörper 9 und zurück bzw. gibt diese frei oder sperrt diese ab.

Das dargestellte Ventil 1 besitzt in seinem bezüglich der Anschlüsse 13 und 14 fernen Bereich einen für den Heizungsvorlauf 20 vorgesehenen Ausgangkanal 19, durch den Heizmedium durch einen, insbesondere seitlich am Ventil vorgesehenen, Auslass aus dem Ventil 1 zum Heizkörper 9 hin ausströmen kann. Außerdem besitzt das Ventil 1 einen, insbesondere rohrförmigen, für den Heizungsrücklauf 18 vorgesehenen Eingangskanal 16, durch den Heizmedium vom Heizkörper 9 in das Ventil 1 und gegebenenfalls in das Küken 15 eingespeist wird. Von dort gelangt das Heizmedium zurück zum Heizkreislauf.

Die beiden Kanäle 16 und 19 sind in der erfindungsgemäßen Ausführungsform vorteilhafterweise konstruktiv so ausgebildet, dass der Eingangskanal 16 zumindest teilweise im Ausgangskanal 19 liegt bzw. zumindest teilweise von diesem umschlossen wird. Dadurch kann das Medium durch den Ausgangskanal 19, und zwar um den Eingangskanal 16 herum, aus dem Ventil 1 in Richtung Heizkörper 9 ausströmen und der Heizungsrücklauf 18 im Inneren dieser Konstruktion, nämlich im Eingangskanal 16, räumlich vom Heizungsvorlauf 20 getrennt, ins Ventil 1 zurückströmen. Eine derartige Ausführung ist besonders platzsparend. Vorteilhaft ist es, wenn der Ausgangskanal 19 und der Eingangskanal 16 eine gemeinsame zentrale Achse 45 aufweisen.

Die zentralen Mittelachsen 13a, 14a des ersten Anschlusses 13 und des zweiten Anschlusses 14 definieren eine Ebene 60 bzw. liegen in dieser Ebene 60. Die zentrale Längs- bzw. Zylinderachse bzw. Drehachse 40 des Kükens 15 ist vorteilhafterweise im Wesentlichen parallel zu dieser Ebene 60 ausgerichtet bzw. verläuft insbesondere in der Ebene 60. Gut erkennbar ist dies in den Fig. 3c, 4c und 5c.

Eine vorteilhafte Anschlussgeometrie und eine erleichterte Anschlussmöglichkeit wird dadurch erreicht, dass die Mittelachsen 13a, 14a der Anschlüsse 13, 14 zueinander parallel ausgerichtet sind. Außerdem ist es vorteilhaft, wenn die Längs- bzw. Zylinderachse 40 des Kükens im Bereich zwischen den zentralen Mittelachsen 13a, 14a verläuft. Dies führt zu einer vorteilhaften Symmetrie des Ventils 1. Besonders vorteilhaft ist es, wenn gleichzeitig die Längs- bzw. Zylinderachse 40 parallel zu zumindest einer der beiden zentralen Mittelachsen 13a,14a, vorzugsweise zu beiden, ausgerichtet ist.

Die bevorzugte Ausführungsform, bei der die zentrale Längs- bzw. Zylinderachse 40 des Kükens 15 in der Ebene 60 verläuft, bei der die zentralen Mittelachsen 13a,14a zueinander parallel ausgerichtet sind, die Längs- bzw. Zylinderachse 40 im Bereich zwischen den zentralen Mittelachsen 13a, 14a verläuft und gleichzeitig parallel zu den zentralen Mittelachsen 13a, 14a ausgerichtet ist, ist in den hier gezeigten Fig. 3, 4 und 5 dargestellt.

Entscheidend für die Möglichkeit die Heizströme bzw. die Durchflussrichtungen zu regulieren ist das Küken 15 und die Ausgestaltung der darin ausgebildeten Durchflusskanäle. Bei der in den Fig. 3a bis 3d, 4a bis 4d und 5a bis 5c gezeigten Ausführungsform des Kükens 15 sind diese Durchflusskanäle vorteilhafterweise ausschließlich normal und parallel zur Längs- bzw. Zylinderachse 40 ausgerichtet. Derartige Durchflusskanäle werden insbesondere durch Bohrungen hergestellt.

Das Küken 15 selbst ist im wesentlichen zylinderförmig, wobei die Längs- bzw. Zylinderachse 40 der Drehachse des Zylinders entspricht und parallel zum Zylindermantel durch die Mittelpunkte der Kreisflächen verläuft.

Das Küken 15 besitzt auf seiner dem Ventil 1 abgewandten Seite eine Ausnehmung 27, in die ein Schraubenschlüssel oder ein ähnliches Werkzeug eingeführt werden kann. Damit kann die Stellung des Kükens 15 verändert werden bzw. das Küken 15 verdreht werden.

Das Küken 15 liegt mit seiner dem Ventil 1 zugewendeten Bodenfläche 28 auf dem Kükenabstützboden 26 auf. In diesem Kükenabstützboden 26 sind eine erste Durchlassöffnung 31 und eine zweite Durchlassöffnung 32 ausgebildet, über die Heizmedium zwischen dem Küken 15 und dem Heizkreislauf ausgetauscht werden kann.

Auf seiner dem Ventil 1 zugewendeten Seite bzw. an der Bodenfläche 28 sind eine Vorlauföffnung 31a und eine Rücklauföffnung 32a ausgebildet, die vorzugsweise diametral bezüglich der Längs- bzw. Zylinderachse 40 gegenüberliegen. Das Heizmedium tritt durch die Vorlauföffnung 31 a in das Küken 15 ein und verlässt dieses in Richtung des Heizkörpers 9. Das vom Heizkörper 9 kommende Heizmedium verlässt das Küken 15 über die Rücklauföffnung 32a.

Werden die Vorlauföffnung 31a bzw. die Rücklauföffnung 32a mit der ersten Durchlassöffnung 31 bzw. der zweiten Durchlassöffnung 32 durch Drehung des Kükens 15 in, zumindest teilweise, Deckung bzw. Überlappung gebracht, ist eine derartige strömungs- bzw. fluidtechnische Wirkverbindung gegeben.

In der Zylinderbodenfläche des Kükens 15 sind außerdem zwei, vorzugsweise diametral bezüglich der Längs- bzw. Zylinderachse 45 gegenüberliegende, Dichtflächen 17 vorgesehen. Diese Dichtflächen 17 bestehen insbesondere aus Kunststoff, vorzugsweise einem Elastomer, oder Keramik. In der Sperrstellung 90 des Kükens liegen diese Dichtflächen 17 über der ersten Durchlassöffnung 31 und der zweiten Durchlassöffnung 32 und verschließen diese fluiddicht, wodurch der Heizmediumstrom unterbrochen wird.

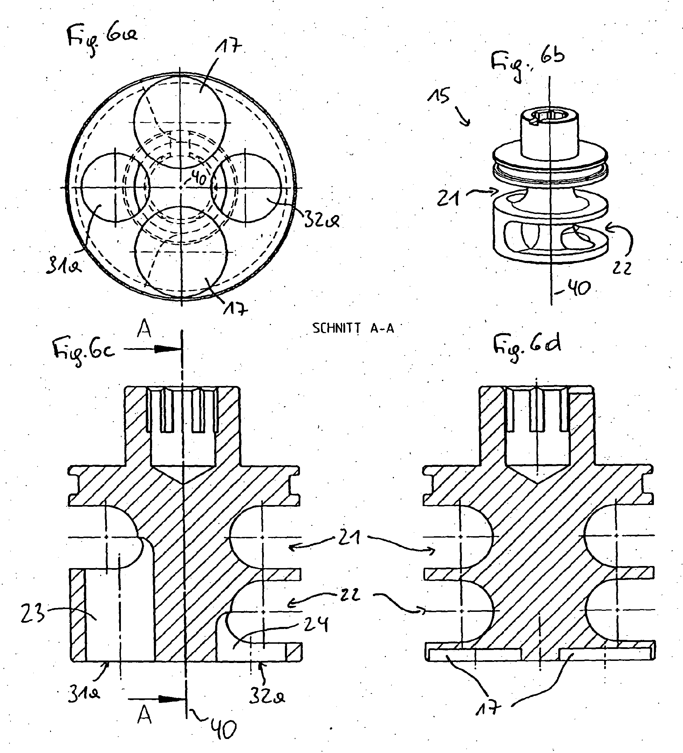

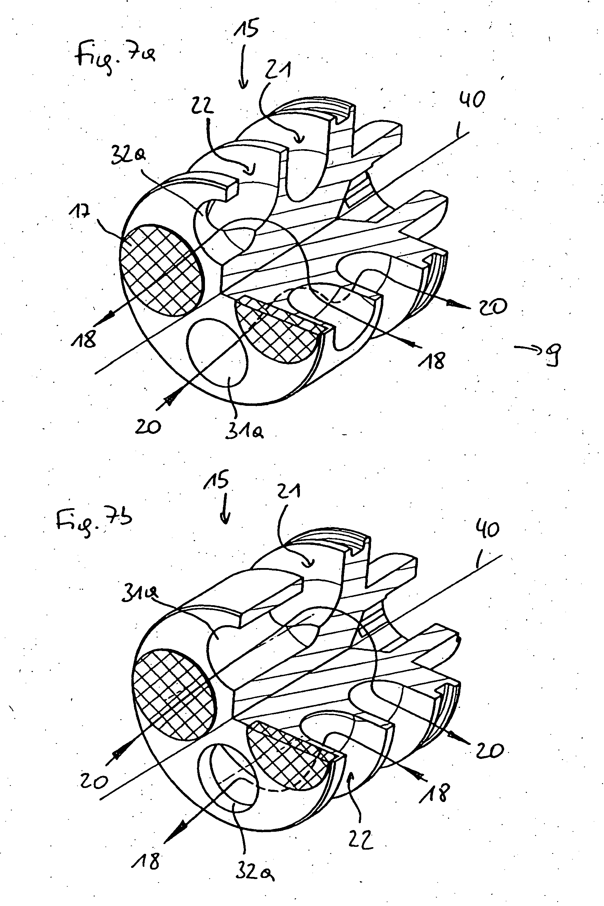

Eine alternative Ausführungsform des Küken 15 ist in den Fig. 6a bis 6d bzw. 7a und b dargestellt.

Das Küken 15 weist dabei eine entlang seines Umfangs, insbesondere durchgehend verlaufende, zur Längs- bzw. Zylinderachse 40 rotationssymmetrische erste Ausnehmung bzw. Ringnut bzw. Einkerbung 21 auf, die insbesondere in dem der Vorlauföffnung 31a bzw. der Bodenfläche 28 fernen Bereich angeordnet ist. Zusätzlich kann eine zweite Ausnehmung bzw. Ringnut bzw. Einkerbung 22 vorgesehen sein, die ebenfalls entlang des Umfangs des Kükens 15 verläuft, zur Längs- bzw. Zylinderachse 40 rotationssymmetrisch ist und im Bereich nahe der Vorlauföffnung 31a bzw. der Bodenfläche 28 ausbildet ist. Diese Einkerbung 22 verläuft jedoch nur über maximal 80% der Umfangslänge durchgehend.

Die Einkerbungen 21, 22 werden während des Betriebs vom Heizmedium durchströmt und bilden bzw. definieren bzw. begrenzen die Durchflusswege durch das Küken 15. In die erste Einkerbung 21 mündet dabei ein, insbesondere parallel zur Längs- bzw. Zylinderachse 60 verlaufender, erster Durchflusskanal 23, der die in der Bodenfläche 28 ausgebildete Vorlauföffnung 31a mit dieser ersten Einkerbung 21 strömungs- bzw. fluidtechnisch verbindet. In die zweite Einkerbung 22 mündet ein zweiter Durchflusskanal 24, der insbesondere parallel zur Längs- bzw. Zylinderachse 40 verläuft, und somit die Rücklauföffnung 32a, die ebenfalls in der Bodenfläche 28 ausgebildet ist, mit dieser zweiten Einkerbung 22 strömungs- bzw. fluidtechnisch verbindet.

Die Durchflusswege durch ein derartiges Küken 15 sind in den Fig. 7a und b dargestellt. Das Heizmedium tritt durch die Vorlauföffnung 31a in das Küken ein, fließt durch den ersten Durchflusskanal 23 in die erste Einkerbung 21, fließt weiter entlang dieser Einkerbung 21, bis es in den Ausgangskanal 19 in Richtung des Heizkörpers 9 weiterfließen kann.

Das vom Heizkörper 9 kommende rücklaufende Heizmedium 18 tritt in das Küken 15 im Bereich der zweiten Einkerbung 22 ein, fließt eine gewisse Wegstrecke entlang dieser zweiten Einkerbung 22 und verlässt durch den zweiten Durchflusskanal und über die Rücklauföffnung 32a das Küken 15 in Richtung Heizkreislauf.

Vorteilhaft ist es, wenn zwischen dem ersten Anschluss 13 und dem zweiten Anschluss 14 eine vom Küken 15 räumlich getrennt verlaufende Bypassverbindung 35 vorgesehen ist.

In dieser Bypassverbindung 35, insbesondere im Bereich der Längs- bzw. Zylinderachse 40, bzw. im Heizungsrohr zwischen den Anschlüssen 13, 14 bzw. zwischen dem Kükenabstützboden 26 und der dem Ventil 1 abgewendeten Seite des Heizungsrohres kann ein Lagerzapfen 25 zur Abstützung ausgebildet sein. Dieser dient insbesondere dazu, Drücke, die auf das Küken 15 ausgeübt werden, abzufangen und die inhärente Stabilität des Ventils 1 zu steigern.

In den Fig. 3c, 4c und 5c sind die unterschiedlichen Stellungen bzw. Positionen des Kükens 15 angegeben. Zur Verdeutlichung sind die Durchflusswege in Detailansichten des Kükens 15 vergrößert dargestellt. Im Prinzip sind drei wesentliche Ventil- bzw. Durchflussstellungen möglich.

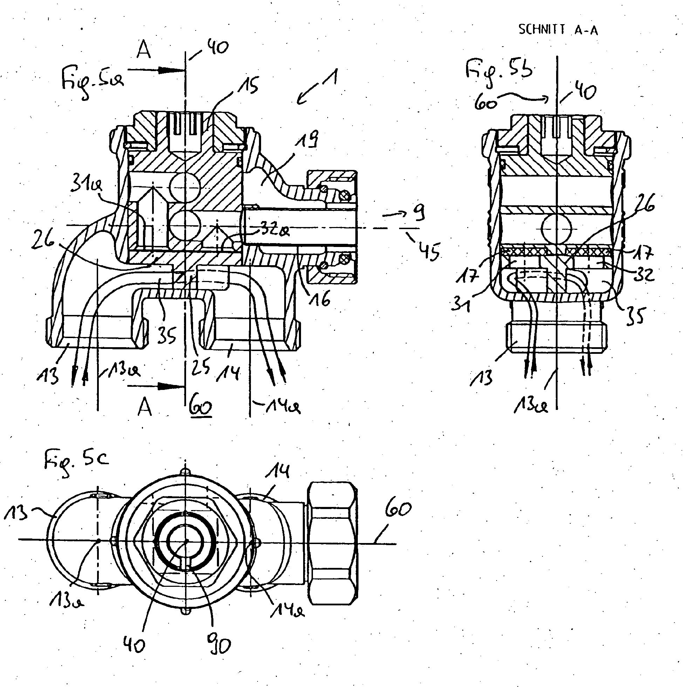

In einer ersten Durchflussstellung 70 gemäß Fig. 3a bis 3d, die durch eine Drehung des Kükens 15 von einer Null- bzw. Sperrstellung 90 (Fig. 5a bis 5c) erreicht wird, steht das Küken 15 in der vorliegenden Ausführungsform so, dass folgende Durchflusswege gestattet sind: Das Heizmedium gelangt durch den als Vorlaufanschluss fungierenden ersten Anschluss 13 über die erste Durchlassöffnung 31 und die Vorlauföffnung 31 a ins Küken 15. Von dort strömt das Heizmedium in den Ausgangskanal 19 und in den Heizkörper 9. Der Heizungsrücklauf 18 gelangt durch den Eingangskanal 16 ins Ventil 1 zurück und verlässt über das Küken 15, d.h. über die Rücklauföffnung 32a und die zweite Durchlassöffnung 32 über den zweiten Anschluss 14, das Ventil 1 und fließt in den Heizkreislauf zurück. Zusätzlich fließt bei dieser Ausführungsform ein ständiger Heizfluidstrom durch die Bypassverbindung 35, und zwar vom ersten Anschluss 13 über den zweiten Anschluss 14 zurück zum Heizkreislauf.

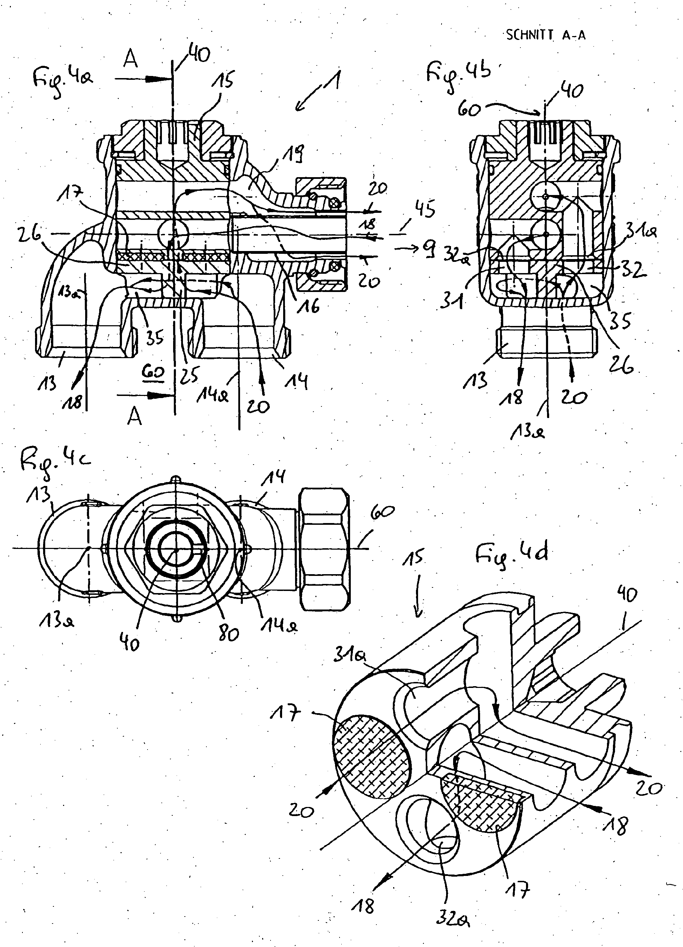

Wird das Küken gemäß Fig. 4a-d von der Null- bzw. Sperrstellung 90 ausgehend, bis zu einer zweiten, zur ersten um 180° veränderten, Durchflussstellung 80 gedreht, so ergibt sich folgende, zur obigen komplementäre, Strömungscharakteristik: Der zweite Anschluss 14 fungiert nun als Vorlaufanschluss, durch den Heizmedium vom Heizkreislauf in das Ventil 1 einströmt. Von dort gelangt das Heizmedium über die zweite Durchgangsöffnung 32 und die Vorlauföffnung 31 a ins Küken 15. Das Heizmedium strömt durch das Küken 15 in den Ausgangkanal 19 und verlässt als Heizungsvorlauf 20 das Ventil 1 in Richtung Heizkörper 9. Der Heizungsrücklauf 18 gelangt wieder über den Eingangkanal 16 ins Ventil 1 zurück und verlässt das Ventil 1 über das Küken 15, d.h. durch die Rücklauföffnung 32a und die erste Durchlassöffnung 31, über den als Rücklaufanschluss fungierenden ersten Anschluss 13. Zusätzlich fließt ein ständiger Heizfluidstrom durch die Bypassverbindung 35, und zwar vom zweiten Anschluss 14 über den ersten Anschluss 13 zurück zum Heizkreislauf.

In der Sperrstellung 90 gemäß Fig. 5a bis 5c steht das Küken 15 so, dass die Dichtflächen 17 die im Kükenabstützboden 26 ausgebildeten Durchlassöffnungen 31,32 fluiddicht verschließen. Das heißt, die strömungstechnische Verbindung des ersten Anschlusses 13 bzw. des zweiten Anschlusses 14 mit dem Ausgangskanal 19 bzw. mit dem Eingangskanal 16 ist nicht mehr gegeben. Der erste Anschluss 13, der entweder als Vorlauf- oder als Rücklaufanschluss fungieren kann, ist mit dem zweiten Anschluss 14, der komplementär als Rücklauf- oder als Vorlaufanschluss fungiert, ausschließlich über die Bypassverbindung 35 verbunden, d.h. der gesamte Heizmittelstrom fließt über die Bypassverbindung 35, der Heizkörper 9 ist aus dem Kreislauf ausgekoppelt.

Durch diese Möglichkeit einer Sperrung kann die Heizmediumzufuhr zum Heizkörper 9 gänzlich unterbunden werden und der Heizkörper 9 kann abmontiert bzw. ausgetauscht werden. Die Möglichkeit einer Sperrstellung 90 muss jedoch nicht zwingend vorgesehen sein.

Es ist festzustellen, dass das Heizmedium das Ventil 1, vorzugsweise immer, durch den Ausgangskanal 19 als Heizungsvorlauf 20 in Richtung Heizkörper 9 verlassen sollte und als Heizungsrücklauf 18 vom Heizkörper 9 über den Eingangskanal 16 in das Ventil 1 zurückströmen sollte. Damit kann sichergestellt werden, dass das Heizmedium immer in den gleichen Anschluss des Heizkörpers 9, nämlich vorteilhafterweise den Radiatorvorlaufanschluss 8, einströmt und zwar unabhängig von der Strömungsrichtung im Heizkreislauf. Zwar könnte der Einstrom in den Heizkörper 9 auch umgekehrt erfolgen, dies ist allerdings aus heiztechnischen Überlegungen ungünstig, da sich die Heizleistung des Heizkörpers verringert.

Die Strömungsrichtung im ersten Anschluss 13 bzw. im zweiten Anschluss 14 ändert sich je nach Stellung des Kükens 15. Damit wird gewährleistet, dass das Ventil 1 auf die bauseitig meist vormontierten Stutzen aufgesetzt werden kann, unabhängig von der im Heizkreislauf vorgegebenen Strömungsrichtung des Heizmediums. Das heißt, die Ventile 1 können ohne Kenntnis bzw. Berücksichtigung der Strömungsrichtung montiert werden ohne Rohrleitungen überkreuzen zu müssen. Die Einstellung der Durchflussrichtung erfolgt später.

Auf dem Gehäuse des Ventils 1 können Hinweismarkierungen in Form von Pfeilen vorgesehen sein, die die Richtung des Vorlaufes anzeigen und nach denen die Stellung des Kükens 15 vorgenommen werden kann.

Die Anschlussarmatur umfasst bei der erfindungsgemäßen Ausführungsform weiters ein T-Stück 2, das mit dem Ausgangskanal 19 und dem Eingangskanal 16 des Ventils 1 strömungstechnisch verbunden ist. Dieses T-Stück 2 gewährleistet, dass der vom Ventil 1 räumlich getrennt vom Heizungsrücklauf 18 ausströmende Heizungsvorlauf 20 zum Radiatorvorlaufanschluss 8 des Heizkörpers geleitet wird und dass der Heizungsrücklauf 18 separat in den Eingangskanal 16 des Ventils 1 gelangt. Zu diesem Zwecke ist im T-Stück 2 ein Rohrelement 12 vorgesehen, das insbesondere den gleichen Durchmesser wie der Eingangskanal 16 aufweist und mit diesem in direkter Strömungsverbindung steht bzw. mit diesem, insbesondere dicht, verbunden oder an diesen anschließbar ist. Dieses Rohrelement 12 kann vorteilhafterweise so ausgebildet sein, dass es zumindest teilweise durch den Radiatorrücklaufanschluss 7 des Heizkörpers 9 hindurch in den Heizkörper 9 hineinragt.

Vorteilhafterweise weisen das Rohrelement 12, der Eingangskanal 16 und der Ausgangskanal 19 eine gemeinsame zentrale Achse 45 auf. Damit ist gewährleistet, dass das Ventil 1 gegenüber dem bzw. relativ zum in dieser Ausführungsform starr angeordneten T-Stück 2 um diese zentrale Achse 45 verdrehbar bzw. verschwenkbar ist. Dies ist beim Einbau bzw. bei der Montage wichtig, da es durch diese konstruktive Ausführung unwesentlich ist, ob sich das Ventil 1 bzw. das T-Stück 2 links oder rechts neben dem Heizkörper 9 befinden. Die Schwenkbarkeit des Ventils 1 gegenüber dem T-Stück 2 bzw. dem Heizkörper 9 ist auch aus dem Grund vorteilhaft, weil dadurch der Anschluss an den Heizkreis senkrecht zur Achse 45 in beliebigen radialen Richtungen bzw. Winkelstellung, vorzugsweise nach unten in den Boden oder nach hinten an die Wand oder schräg, erfolgen kann bzw. ein Anschluss an aus der Wand ragende bauseitige Anschlüsse einfach erfolgen kann.

Ein weiterer Faktor, der einen Einbau erleichtert, ist die Tatsache, dass das Ventil 1 und/oder das T-Stück 2 bezüglich der Ebene 60 des Ventils 1 im Wesentlichen symmetrisch sind.

## Patentansprüche

1. Anschlussarmatur für den Anschluss zumindest eines Heizkörpers (9) an einen, insbesondere als Einrohr-System ausgebildeten, Heizkreislauf einer Heizanlage, umfassend ein an den Heizkreislauf mit Vorlauf und Rücklauf angeschlossenes schalt- bzw. regelbares Ventil (1), wobei für den Vorlauf bzw. den Rücklauf aus dem bzw. in den Heizkreislauf heizkreislaufseitige Anschlüsse, nämlich ein erster Anschluss (13) und ein zweiter Anschluss (14), vorgesehenen sind, deren zentrale Mittelachsen (13a,14a) in einer Ebene (60) liegen bzw. eine Ebene (60) definieren, und wobei die Durchflusswege des Heizmediums vom Heizkreislauf durch das Ventil (1) hindurch zum Heizkörper (9) und zurück durch ein im wesentlichen zylindrisches, bezüglich seiner zentralen Längs- bzw. Zylinderachse (40) verdrehbares, die Durchflusswege in Abhängigkeit von seiner Stellung wechselseitig sperrendes bzw. öffnendes, Küken (15) geregelt sind, wobei die zentrale Längs- bzw. Zylinderachse (40) des Kükens (15) im wesentlichen parallel zur, insbesondere in der, Ebene (60) ausgerichtet ist bzw. verläuft, **dadurch gekennzeichnet, dass** die Längs- bzw. Zylinderachse (40) des Kükens (15) zwischen den zentralen Mittelachsen (13a,14a) der Anschlüsse (13,14) verläuft.

2. Anschlussarmatur nach Anspruch 1, **dadurch gekennzeichnet, dass** die zentralen Mittelachsen (13a,14a) der Anschlüsse (13,14) zueinander parallel ausgerichtet sind.

3. Anschlussarmatur nach einem der Ansprüche 1 bis 2, **dadurch gekennzeichnet, dass** die Längs- bzw. Zylinderachse (40) des Kükens (15) parallel zu zumindest einer der beiden zentralen Mittelachsen (13a,14a) ausgerichtet ist.

4. Anschlussarmatur nach einem der Ansprüche 1 bis 3, **dadurch gekennzeichnet, dass** im Küken (15), vorzugsweise ausschließlich, normal und/oder parallel zur Längs- bzw. Zylinderachse (40) ausgerichtete Durchflusskanäle ausgebildet sind.

5. Anschlussarmatur nach einem der Ansprüche 1 bis 4, **dadurch gekennzeichnet, dass** zwischen dem ersten Anschluss (13) und dem zweiten Anschluss (14) eine vom Küken (15) räumlich getrennt verlaufende Bypassverbindung (35) vorgesehen ist.

6. Anschlussarmatur nach einem der Ansprüche 1 bis 5, **dadurch gekennzeichnet, dass** das Ventil (1) einen heizkörperseitigen Ausgangskanal (19), durch den das Heizmedium vom Heizkreislauf in den Heizkörper (9) gelangt, und einen heizkörperseitigen Eingangskanal (16) aufweist, durch den das Heizmedium aus dem Heizkörper (9) zurück zum Heizkreislauf gelangt, wobei der Eingangskanal (16) zumindest teilweise im Ausgangskanal (19) liegt bzw. zumindest teilweise von diesem umschlossen wird, wobei der Ausgangskanal. (19) und der Eingangskanal (16) gegebenenfalls eine gemeinsame zentrale Achse (45) aufweisen.

7. Anschlussarmatur nach einem der Ansprüche 1 bis 6, **dadurch gekennzeichnet,**
- **dass** das Küken (15) im Ventil (1) zumindest eine erste Durchflussstellung (70) (Fig. 3a-d) hat, bei der der als Vorlaufanschluss fungierende erste Anschluss (13) mit dem Ausgangskanal (19) und der als Rücklauf fungierende zweite Anschluss (14) mit dem Eingangskanal (16) fluidleitend bzw. strömungstechnisch in Verbindung stehen, wobei gegebenenfalls der erste Anschluss (13) zusätzlich direkt mit dem zweiten Anschluss (14) fluidleitend bzw. strömungstechnisch über die Bypassverbindung (35) verbunden ist,
- **dass** das Küken (15) im Ventil (1) zumindest eine zweite komplementäre Durchflussstellung (80) (Fig. 4a-d) hat, bei der der als Vorlaufanschluss fungierende zweite Anschluss (14) mit dem Ausgangskanal (19) und der als Rücklauf fungierende erste Anschluss (13) mit dem Eingangskanal (16) fluidleitend bzw. strömungstechnisch in Verbindung stehen, wobei gegebenenfalls der erste Anschluss (13) direkt mit dem zweiten Anschluss (14) fluidleitend bzw. strömungstechnisch über die Bypassverbindung (35) verbunden ist,
- und **dass** das Küken (15) im Ventil (1) gegebenenfalls zumindest eine Sperrstellung (90) hat, bei der die fluidleitenden bzw. strömungstechnischen Verbindung des ersten Anschlusses (13) und des zweiten Anschlusses (14) mit dem Ausgangskanal (19) sowie dem Eingangskanal (16) gesperrt sind und gegebenenfalls der erste Anschluss (13) mit dem zweiten Anschluss (14) nur über die Bypassverbindung (35) fluidleitend bzw. strömungstechnisch verbunden ist.

8. Anschlussarmatur nach einem der Ansprüche 1 bis 7, **dadurch gekennzeichnet, dass** auf der den Anschlüssen (13,14) zugewendeten Bodenfläche (28) des Kükens (15) eine Vorlauföffnung (31a) und eine Rücklauföffnung (32a) ausgebildet sind, die vorzugsweise diametral bezüglich der Längs- bzw. Zylinderachse (40) gegenüberliegen und die, insbesondere in den Durchflussstellungen (70, 80), mit einer im Ventil (1), insbesondere in einem Kükenabstützboden (26), ausgebildeten ersten Durchlassöffnung (31) und zweiten Durchlassöffnung (32) fluidleitend bzw. strömungstechnisch verbunden sind.

9. Anschlussarmatur nach einem der Ansprüche 1 bis 8, **dadurch gekennzeichnet, dass** das Küken (15) eine entlang seines Umfangs, insbesondere durchgehend, verlaufende, zur Längs- bzw. Zylinderachse (40) rotationssymmetrische, insbesondere der Vorlauföffnung (31a) bzw. der Bodenfläche (28) ferne, erste Einkerbung (21) und gegebenenfalls eine entlang seines Umfangs verlaufende, zur Längs- bzw. Zylinderachse (40) rotationssymmetrische, insbesondere der Vorlauföffnung (31a) bzw. der Bodenfläche (28) nahe, zweite Einkerbung (22), die nur über maximal 80% der Umfangslänge durchgehend verläuft, aufweist, durch die Heizmedium durchströmt bzw. Durchflusswege gebildet bzw. definiert bzw. begrenzt werden.

10. Anschlussarmatur nach einem der Ansprüche 1 bis 9, **dadurch gekennzeichnet, dass** in die erste Einkerbung (21) ein, insbesondere parallel zur Längs- bzw. Zylinderachse (40) verlaufender, erster Durchflusskanal (23) mündet, der die Vorlauföffnung (31a) mit der ersten Einkerbung (21) strömungstechnisch verbindet und dass in die zweite Einkerbung (22) ein, insbesondere parallel zur Längs- bzw. Zylinderachse (40) verlaufender, zweiter Durchflusskanal (24) mündet, der die Rücklauföffnung (32a) mit der zweiten Einkerbung (22) strömungstechnisch verbindet.

11. Anschlussarmatur nach einem der Ansprüche 1 bis 10, **dadurch gekennzeichnet, dass** auf der Bodenfläche (28) des Kükens (15) zwei, vorzugsweise diametral bezüglich der Längs- bzw. Zylinderachse (40) gegenüberliegende, Dichtflächen (17), insbesondere aus Kunststoff, vorzugsweise einem Elastomer, oder Keramik, ausgebildet sind, durch die in der Sperrstellung (90) eine Absperrung der Durchflusswege durch fluiddichte Verschließung der Durchlassöffnungen (31,32) erfolgt.

12. Anschlussarmatur nach einem der Ansprüche 1 bis 11, **dadurch gekennzeichnet, dass** in der Bypassverbindung (35), insbesondere im Bereich der Längs- bzw. Zylinderachse (40), bzw. im Heizungsrohr zwischen den Anschlüssen 13, 14 bzw. zwischen dem Kükenabstützboden 26 und der dem Ventil 1 abgewendeten Seite des Heizungsrohres ein Lagerzapfen (25) zur Abstützung ausgebildet ist.

13. Anschlussarmatur nach einem der Ansprüche 1 bis 12, **dadurch gekennzeichnet, dass** ein mit dem Ausgangskanal (19) und dem Eingangskanal (16) des Ventils (1) verbundenes T-Stück (2), mit dem das Heizmedium als Vorlauf in den Heizkörper (9), getrennt vom Rücklauf aus dem Heizkörper (9), einspeisbar ist, vorgesehen ist, dessen eines Ende mit einem Radiatorvorlaufanschluss (8) des Heizkörpers (9) und dessen anderes Ende mit einem Radiatorrücklaufanschluss (7) des Heizkörpers (9) verbunden ist, insbesondere über ein im T-Stück (2) vorgesehenes Rohrelement (12), das mit dem Eingangskanal (16) des Ventils (1) in direkter Strömungsverbindung steht bzw. an diesen anschließbar ist und vorzugsweise zumindest mit einem Teilbereich in den Heizkörper (9), vorzugsweise im Bereich des Radiatorrücklaufanschlusses (7), ragt.

14. Anschlussarmatur nach einem der Ansprüche 1 bis 13, **dadurch gekennzeichnet, dass** das Rohrelement (12), der Eingangskanal (16) und der Ausgangskanal (19) eine gemeinsame zentrale Achse (45) aufweisen und dass das Ventil (1) um diese Achse (45) relativ gegenüber dem T-Stück (2) verdrehbar bzw. verschwenkbar ist, um den Anschluss des Ventils (1) an den Heizkreislauf in beliebigen Winkelstellungen zu gewährleisten.

15. Anschlussarmatur nach einem der Ansprüche 1 bis 14, **dadurch gekennzeichnet, dass,** insbesondere zwischen dem T-Stück (2) und dem Radiatorvorlaufanschluss (8), eine, insbesondere manuell oder thermostatisch geregelte, Reguliereinheit (3a,3b) zur Steuerung bzw. Regelung der Heizleistung vorgesehen ist.

## Claims

1. Connection fitting for connecting at least one radiator (9) to a heating circuit, in particular being formed as one-tube system, of a heating installation, comprising a switchable and/or controllable valve (1) connected to said heating circuit, which includes a forward stroke and a return stroke, connectors at the side of said heating circuit being provided for said forward stroke and said return stroke from said heating circuit and into it, i.e. a first connector (13) and a second connector (14), whose central middle axes (13a, 14a) are situated in a plane (60) or define a plane (60), and wherein the passages of flow of the heating medium from said heating circuit through said valve (1) to said radiator (9) and back are controlled by a substantially cylindrical stop cock (15), which may be rotated with respect to a central longitudinal or cylinder axis (40), thus alternately blocking or opening said passages of flow as a function of its position, said central longitudinal or cylinder axis (40) of said stop cock (15) being substantially oriented and extending parallel to said plane (60), particularly within said plane, **characterised in that** said central longitudinal or cylinder axis (40) of said stop cock (15) extends between said central middle axes (13a, 14a) of said connectors (13, 14).

2. Connection fitting according to claim 1, **characterised in that** said central middle axes (13a, 14a) of said connectors (13, 14) are oriented parallel to each other.

3. Connection fitting according to any of claims 1 to 2, **characterised in that** said longitudinal or cylinder axis (40) of said stop cock (15) is oriented parallel to at least one of said two central middle axes (13a, 14a).

4. Connection fitting according to any of claims 1 to 3, **characterised in that** passage channels are formed within said stop cock (15), which are oriented, preferably exclusively, perpendicularly and/or parallel to said longitudinal or cylinder axis (40).

5. Connection fitting according to any of claims 1 to 4, **characterised in that** a by-pass connection (35), which extends separated in spaced relationship to said stop cock (15), is provided between said first connector (13) and said second connector (14).

6. Connection fitting according to any of claims 1 to 5, **characterised in that** said valve (1), at the side of said radiator, comprises an outlet channel (19) through which the heating medium from said heating circuit reaches said radiator (9), and, at the side of said radiator, comprises an inlet channel (16) through which the heating medium from said radiator (9) flows back to said heating circuit, the inlet channel (16) being situated, at least in part, within said outlet channel (19), thus being surrounded by it at least in part, said outlet channel (19) and said inlet channel (16) optionally having a central axis (45) in common.

7. Connection fitting according to any of claims 1 to 6, **characterised in**
- said stop cock (15) within said valve (1) comprises at least one first passage position (70) (Fig. 3a-d), wherein said first connector (13), functioning as a forward stroke connector, communicates with the outlet channel (19), and said second connector (14), functioning as a return stroke connector, communicates with said inlet channel (16), both in a fluid conducting and inflow technical way, wherein optionally said first connector (13), in addition, is directly connected to said second connector (14) in a fluid conducting and inflow technical way through said by-pass connection (35),
- that said stop cock (15) within said valve (1) comprises at least one second, complementary passage position (80) (Fig. 4a-d), wherein said second connector (14), functioning as a forward stroke connector, communicates with said outlet channel (19) and said first connector (13), functioning as said return stroke, communicates with said inlet channel (16), both in a fluid conducting and inflow technical way, wherein optionally said first connector (13) is directly connected to said second connector (14) in a fluid conducting and inflow technical way through said by-pass connection (35),
- and that said stop cock (15) within said valve (1) comprises optionally at least one blocking position (90), wherein the fluid conducting and inflow technical communications of said first connector (13) and of said second connector (14) to said outlet channel (19) as well as to said inlet channel (16) are blocked, und wherein optionally said first connector (13) is connected to said second connector (14) in a fluid conducting and inflow technical way solely through said by-pass connection (35).

8. Connection fitting according to any of claims 1 to 7, **characterised in that** a forward stroke opening (31 a) and a return stroke opening (32a) are formed in the bottom surface (28) of said stop cock (15), which faces said connectors (13, 14), said openings being preferably diametrically opposed with respect said longitudinal axis or cylinder axis (40), and which, particularly in the passage positions (70, 80), communicate in a fluid conducting and inflow technical way with a first passage opening (31) and a second passage opening (32) formed in said valve (1), in particular in a cock support bottom (26).

9. Connection fitting according to any of claims 1 to 8, **characterised in that** said stop cock (15), along its periphery, comprises a first indentation (21) symmetrical with respect to rotation to said longitudinal axis or cylinder axis (40), and in particular extending continuously, particularly remote from said forward stroke opening (31 a) and said bottom surface (28), said stop cock optionally further comprising a second indentation (22) symmetrical with respect to rotation to said longitudinal axis or cylinder axis (40), extending along its periphery, particularly near to said forward stroke opening (31 a) and said bottom surface (28), which extends continuously in maximum only over 80% of the periphery's length, and through which heating medium passes and passage ways are formed and defined and delimited.

10. Connection fitting according to any of claims 1 to 9, **characterised in that** a first passage channel (23), in particular extending parallel to said longitudinal axis or cylinder axis (40), opens into said first indentation (21) and connects in a flow technical way said forward stroke opening (31 a) to said first indentation (21), and that a second passage channel (24), in particular extending parallel to said longitudinal axis or cylinder axis (40), opens into said second indentation (22) and connects in a flow technical way said return stroke opening (32a) to said second indentation (22).

11. Connection fitting according to any of claims 1 to 10, **characterised in that** two sealing surfaces (17), particularly of plastic material, as preferred of an elastomer or of ceramic material, and preferably diametrically opposed with respect to said longitudinal axis or cylinder axis (40), are formed on the bottom surface (28) of said stop cock (15), by which, in blocking position (90), the passage ways are blocked by fluid tight closure of said passage openings (31, 32).

12. Connection fitting according to any of claims 1 to 11, **characterised in that** a trunnion (25) is formed for support in the by-pass connection (35), particularly in the region of said longitudinal axis or cylinder axis (40) or in the heating tube between the connectors (13, 14) or between the cock support bottom (26) an that side of the heating tube, which is turned away from said valve (1).

13. Connection fitting according to any of claims 1 to 12, **characterised in that** a T-piece (2), connected to said outlet channel (19) and to said inlet channel (16) of said valve (1), is provided, by which the heating medium may be fed, as a forward stroke, into said radiator (9), separated from the return stroke from the radiator (9), one end of which being connected to a radiator forward stroke connector (8) of said radiator (9), whereas its other end is connected to the radiator return stroke connector (7) of said radiator (9), particularly through a tube element (12) provided in said T-piece (2), which is in direct flow communication with said inlet channel (16) of said valve (1) or may be connected to it, and of which at least a partial portion preferably extends into said radiator (9), preferably within the region of the radiator return stroke connector (7).

14. Connection fitting according to any of claims 1 to 13, **characterised in that** said tube element (12), said inlet channel (16) and said outlet channel (19) have a central axis (45) in common, and that said valve (1) may be rotated or pivoted about said axis (45) relative to said T-piece (2) to ensure connection of said valve (1) to the heating circuit in any angular position.

15. Connection fitting according to any of claims 1 to 14, **characterised in that** a regulating unit (3a, 3b) for controlling or regulating the heating power is provided, particularly between said T-piece (2) and said radiator forward stroke connector (8), which in particular is manually or thermostatically controlled.

## Revendications

1. Dispositif pour le raccordement d'au moins un corps de chauffe (9) à un circuit de chauffage, particulièrement formé comme un système à tube unique, d'une installation de chauffage, comprenant une soupape (1) capable d'une coupure et/ou réglable et raccordée au circuit de chauffage, qui comprend un aller et un reflux, dans lequel des raccords au côté du circuit de chauffage sont prévus pour le conduit d'alimentation et le conduit de reflux, à savoir un premier raccord (13) et un deuxième raccord (14), dont les axes centraux (13a, 14a) sont situés dans un plan (60) ou définissent un plan (60), et dans lequel les chemins de passage du milieu de chauffage, à partir du circuit de chauffage à travers la soupape (1) vers le corps de chauffage (9) et retour, sont réglés par un robinet à boisseau (15) sensiblement cylindrique, qui peut être tourné par rapport son axe central longitudinal ou de cylindre (40) et qui bloque ou ouvre alternativement les chemins de passage en fonction de sa position, ledit axe central longitudinal ou de cylindre (40) du robinet à boisseau (15) étant orienté ou s'étendant sensiblement parallèlement au, en particulier dans le plan (60), **caractérisé en ce, que** l'axe longitudinal ou de cylindre (40) du robinet à boisseau (15) s'étend entre les axes médians centraux (13a, 14a) des raccords (13, 14).

2. Dispositif de raccordement selon la revendication 1, **caractérisé en ce, que** les axes médians centraux (13a, 14a) des raccords (13, 14) sont parallèles l'un par rapport à l'autre.

3. Dispositif de raccordement selon la revendication 1 ou 2, **caractérisé en ce, que** l'axe longitudinal ou de cylindre (40) du robinet à boisseau (15) est orienté parallèlement à au moins un des deux axes médians centraux (13a, 14a).

4. Dispositif de raccordement selon une quelconque des revendications 1 à 3, **caractérisé en ce, que** des conduits de passage sont formés dans le robinet à boisseau (15), qui sont orientés, de préférence exclusivement, perpendiculairement et/ou parallèlement à l'axe longitudinal ou de cylindre (40).

5. Dispositif de raccordement selon une quelconque des revendications 1 à 4, **caractérisé en ce, qu**'une connexion de dérivation (35) est prévue, qui s'étend spatialement séparée du robinet à boisseau (15), entre le premier raccord (13) et le deuxième raccord (14).

6. Dispositif de raccordement selon une quelconque des revendications 1 à 5, **caractérisé en ce, que** la soupape (1) comprend un conduit de sortie (19) au côté du corps de chauffe, à travers duquel le milieu de chauffage parvient du circuit de chauffage au corps de chauffe (9), et un conduit d'entrée (16) au côté du corps de chauffe, à travers duquel le milieu de chauffage parvient en retour du corps de chauffe (9) au circuit de chauffage, ledit conduit d'entrée (16) étant situé, au moins partiellement, dans le conduit de sortie (19) ou est entouré au moins partiellement par celui-ci, dans lequel le conduit de sortie (19) et le conduit d'entrée (16) ont, le cas échéant, un axe central (45) en commun.

7. Dispositif de raccordement selon une quelconque des revendications 1 à 6, **caractérisé en ce,**
- **que** le robinet à boisseau (15) dans la soupape (1) a au moins une première position de passage (70) (figure 3a-d), dans laquelle le premier raccord (13), fonctionnant comme raccord d'aller, communique d'une façon conductrice de fluide ou se rapportant à la technique des fluides avec le conduit de sortie (19), et le deuxième raccord (14), fonctionnant comme raccord de reflux, communique d'une façon conductrice de fluide ou se rapportant à la technique des fluides avec le conduit d'entrée (16), le premier raccord (13) communicant d'une façon conductrice de fluide ou se rapportant à la technique des fluides, le cas échéant, additionnellement directement avec le deuxième raccord (14) à travers la connexion de dérivation (35),
- **que** le robinet à boisseau (15) dans la soupape (1) a au moins une deuxième position de passage (80) complémentaire (figure 4a-d), dans laquelle le deuxième raccord (14), fonctionnant comme raccord du conduit d'aller, communique d'une façon conductrice de fluide ou se rapportant à la technique des fluides avec le conduit de sortie (19), et le premier raccord (13), fonctionnant comme raccord de reflux, communique d'une façon conductrice de fluide ou se rapportant à la technique des fluides avec le conduit d'entrée (16), le premier raccord (13) communicant d'une façon conductrice de fluide ou se rapportant à la technique des fluides, le cas échéant, directement avec le deuxième raccord (14) à travers la connexion de dérivation (35),
- et **que** le robinet à boisseau (15) dans la soupape (1) a, le cas échéant, au moins une position de blocage (90), dans laquelle les communications conductrices de fluide ou se rapportant à la technique des fluides du premier raccord (13) et du deuxième raccord (14) avec le conduit de sortie (19) ainsi qu'avec le conduit d'entrée (16) sont bloquées, et que le premier raccord (13) communicant d'une façon conductrice de fluide ou se rapportant à la technique des fluides, le cas échéant, avec le deuxième raccord (14) seulement à travers la connexion de dérivation (35).

8. Dispositif de raccordement selon une quelconque des revendications 1 à 7, **caractérisé en ce, qu**'une ouverture d'aller (31 a) et une ouverture de reflux (32a) sont formées à la surface inférieure (28), tournée vers les raccords (13, 14), du robinet à boisseau (15), qui de préférence sont diamétralement opposées par rapport à l'axe longitudinal ou de cylindre (40), et qui, particulièrement dans les positions de passage (70, 80), communiquent d'une façon conductrice de fluide ou se rapportant à la technique des fluides avec une première ouverture de passage (31), formée dans la soupape (1), en particulier dans un fond-support (26) du robinet à boisseau, et avec und deuxième ouverture de passage (32).

9. Dispositif de raccordement selon une quelconque des revendications 1 à 8, **caractérisé en ce, que** le robinet à boisseau (15) comprend une première rainure (21) s'étendant le long de sa périphérie, en particulier continuellement, à symétrie de révolution par rapport à l'axe longitudinal ou de cylindre (40), particulièrement éloignée de l'ouverture d'aller (31 a) et/ou de la surface inférieure (28), et le cas échéant, une deuxième rainure (22) s'étendant le long de sa périphérie, en particulier à symétrie de révolution par rapport à l'axe longitudinal ou de cylindre (40), particulièrement proche à l'ouverture d'alimentation (31 a) et/ou de la surface inférieure (28), qui s'étend seulement continuellement sur 80% en maximum de la longueur de la périphérie, à travers de laquelle le milieu de chauffage coule et des chemins de passage sont formés ou définis ou délimité.

10. Dispositif de raccordement selon une quelconque des revendications 1 à 9, **caractérisé en ce, qu**'un premier conduit de passage (23) débouche dans la première rainure (21) et, en particulier, s'étend parallèlement à l'axe longitudinal ou de cylindre (40), ledit premier conduit de passage reliant d'une façon se rapportant à la technique des fluides l'ouverture d'aller (31a) avec la première rainure (21), et qu'un deuxième conduit de passage (24) débouche dans la deuxième rainure (22) et, en particulier, s'étend parallèlement à l'axe central longitudinal ou de cylindre (40), ledit deuxième conduit de passage reliant d'une façon se rapportant à la technique des fluides l'ouverture de reflux (32a) avec la deuxième rainure (21).

11. Dispositif de raccordement selon une quelconque des revendications 1 à 10, **caractérisé en ce, que** deux surfaces d'étanchéité (17), particulièrement d'un matériau plastique, préférablement d'un élastomère ou d'une céramique, sont formées à la surface inférieure (28) du robinet à boisseau (15), qui sont de préférence diamétralement opposées par rapport à l'axe longitudinal ou de cylindre (40), par lesquelles, en position de blocage (90), un blocage des chemins de passage est effectué par une fermeture, étanche contre le fluide, des ouvertures de passage (31, 32).

12. Dispositif de raccordement selon une quelconque des revendications 1 à 11, **caractérisé en ce, qu**'un tourillon (25) est formé pour le support dans da connexion de dérivation (35), particulièrement dans la zone de l'axe longitudinal ou de cylindre (40), ou dans le tuyau de chauffage entre les raccords (13, 14) ou entre le fond-support (26) du robinet à boisseau et le côté du tuyau de chauffage détourné de la soupape (1).

13. Dispositif de raccordement selon une quelconque des revendications 1 à 12, **caractérisé en ce, qu**'une pièce en T (2) reliée au conduit de sortie (19) et au conduit d'entrée (16) de la soupape (1) est prévue, avec laquelle le milieu de chauffage peut être alimenté, comme aller, dans le corps de chauffe (9), séparé du reflux à partir du corps de chauffage (9), un bout dudit pièce étant relié avec un raccord d'aller du radiateur (8) du corps de chauffage (9), tandis que l'autre bout est relié au raccord de reflux du radiateur (7) du corps de chauffe (9), particulièrement à travers d'un élément de tuyau (12), prévu dans la pièce en T (2), qui est en communication directe d'écoulement avec le conduit d'entrée (16) de la soupape (1) ou peut être relié à celui-ci, et dont, de préférence, au moins une zone partielle fait saillie dans le corps de chauffe (9), préférablement dans la zone du raccord de reflux du radiateur (7).

14. Dispositif de raccordement selon une quelconque des revendications 1 à 13, **caractérisé en ce, que** l'élément de tuyau (12), le conduit d'entrée (16) et le conduit de sortie (19) ont un axe central (45) en commun, et que la soupape (1) peut être tournée ou pivotée autour de cet axe (45) relativement par rapport à la pièce en T (2), pour assurer en positions angulaires quelconques le raccordement de la soupape (1) au circuit de chauffage.

15. Dispositif de raccordement selon une quelconque des revendications 1 à 14, **caractérisé en ce, qu**'une unité de réglage (3a, 3b) pour commander ou régler la puissance de chauffage, en particulier réglée manuellement ou à thermostat, est prévue, particulièrement entre la pièce en T (2) et le raccord d'aller du radiateur (8).
